# EUROPEAN PATENT APPLICATION

(11) **EP 3 591 264 A1**
(43) Date of publication of application: **08.01.2020**
(21) Application number: 18761010.0
(22) Date of filing: 11.02.2018
(51) Int. Cl.: F16H 63/34, F16H 37/08

(54) **REDUCER AND WHEEL-SIDE DRIVING MECHANISM AND ELECTRIC VEHICLE USING SAME**

(30) Priority: 28.02.2017 CN 201710112669
(71) Applicant: Zhengzhou Yutong Bus Co., Ltd., Zhengzhou, Henan 450061 (CN)
(72) Inventor: BAI, Xuesen, Zhengzhou Henan 450061 (CN); CHEN, Huiyong, Zhengzhou Henan 450061 (CN); ZHANG, Xiaowei, Zhengzhou Henan 450061 (CN); WANG, Yinshu, Zhengzhou Henan 450061 (CN); MA, Ying, Zhengzhou Henan 450061 (CN); ZUO, Lifeng, Zhengzhou Henan 450061 (CN); DONG, Weichao, Zhengzhou Henan 450061 (CN); ZHANG, Fuxing, Zhengzhou Henan 450061 (CN)
(74) Representative: Gulde & Partner
(86) International application number: PCT/CN2018/076297
(87) International publication number: WO 2018/157733

(57) **Abstract**

A reducer, a wheel-side driving mechanism and an electric vehicle using the reducer. The wheel-side driving mechanism of the electric vehicle comprises: a wheel-side motor, and a reducer drivably connected to the wheel-side motor; any transmission shaft of the reducer is provided with a ratchet wheel (3) which rotates synchronously with the transmission shaft; the ratchet wheel (3) has a counting structure; a casing (5) is provided with an ABS sensor (1) provided corresponding to the counting structure on the ratchet wheel (3) to detect the rotation speed of wheels; a parking pawl (2) is further movably disposed on the casing (5); and the parking pawl (2) can lock and unlock the ratchet wheel (3) during operation. In this way, the ratchet wheel (3) which is used cooperatively with the ABS sensor (1) to achieve the detection of the rotation speed of wheels by means of the ABS system is simultaneously used to cooperate with the parking pawl (2) to achieve parking, and the integration of ABS speed measurement and P-position parking is thus achieved, thus enriching the function of the reducer, reducing the size of the wheel-side driving mechanism and optimizing vehicle performances; and the ratchet wheel does not participate in transmission, is thus not affected by the transmission speed ratio, and can be used by matching with electric vehicles of various types.

## Description

### Technical Field

The invention relates to the field of vehicles, and particularly relates to a reducer and a wheel-side driving mechanism and an electric vehicle using the reducer.

### Description of Related Art

With the continuous shortage of oil and gas resources, the development of electric vehicles using green energy has progressed rapidly. Also, as motor technologies become more and more mature, electric vehicles adopting wheel-side driving and wheel-hub driving are widely used. In order to improve and optimize various performances of the electric vehicles, wheel-side driving mechanisms are generally being developed toward a smaller size and a higher degree of integration.

Regarding electric vehicles adopting wheel-side driving mechanisms, particularly buses, various functions, such as the ABS function and safe parking, need to be achieved through the wheel-side driving mechanisms. However, regarding the P-position, i.e., the parking gear, the conventional electric vehicles are not provided with a wide matching range for the wheel-side driving mechanisms. Also, the ABS sensors for speed detection are mostly installed on the wheel hubs, and thus not only occupy a larger space but also greatly affect the strength and weight of the transmission shafts.

### SUMMARY OF THE INVENTION

The objective of the invention is to provide a reducer suitable for a wheel-side driving mechanism, so as to reduce the size of the wheel-side driving mechanism and increase the degree of integration of the wheel-side driving mechanism. Meanwhile, the invention also provides a wheel-side driving mechanism and an electric vehicle using the reducer.

Specifically, the reducer of the invention includes a casing and a transmission shaft rotatably installed on the casing. The transmission shaft at least comprises an input shaft drivably connected with a wheel-side motor and an output shaft drivably connected with a wheel hub. Any transmission shaft is provided with a ratchet wheel which rotates synchronously with the transmission shaft. The ratchet wheel has a counting structure. The counting structure is a continuous concave and convex structure. The casing is provided with an ABS sensor provided corresponding to the counting structure on the ratchet wheel to detect a rotation speed of wheels. A parking pawl is further movably disposed on the casing, and the parking pawl is capable of locking and unlocking the ratchet wheel during operation. In this way, the ratchet wheel which is used cooperatively with the ABS sensor to achieve the detection of the rotation speed of wheels by means of the ABS system is simultaneously used to cooperate with the parking pawl to achieve parking, and the integration of ABS speed measurement and P-position parking is achieved, thus enriching the functions of the reducer, and significantly reducing the size of the wheel-side driving mechanism when the reducer is applied to the wheel-side driving mechanism. In addition, since the ratchet wheel does not participate in transmission, the structure and the size of the ratchet wheel are not affected by the transmission speed ratio, and can be used by matching with electric vehicles of various types.

Specifically, during disposing of the ratchet wheel, the ratchet wheel may be a disc-shaped ratchet wheel that is rotation-stoppably installed on the transmission shaft. The disc-shaped ratchet wheel may be provided with a greater diameter. In this way, not only the tooth number is increased, which improves the tooth reading accuracy of the ABS sensor, but each tooth can also be provided with a higher structural strength, which ensures parking safety.

On the basis of any one of the two technical solutions of the reducer above, it may be further limited that the ratchet wheel is disposed on the output shaft, so that not only the integration with other structural components becomes more convenient, but the ratchet wheel may also directly act on the wheel hub through the output shaft, while other structural parts do not receive the locking force.

On the basis of any one of the three technical solutions of the reducer above, it may be further limited that the ratchet wheel is located inside the casing. The casing has a protective effect on the ratchet wheel to prevent other parts or external objects from interfering with and affecting the ratchet wheel.

On the basis of any one of the four technical solutions of the reducer above, further optimization may be carried out to provide the casing with a parking motor. The parking motor is capable of driving operation of the parking pawl through a transmission mechanism to achieve the locking and unlocking of the ratchet wheel. With the parking motor driving the parking pawl, by setting the transmission ratio of the transmission structure, the parking pawl can be provided with a force sufficient to be engaged with and disengaged from the tooth slot of the ratchet wheel.

When the parking motor is adopted to drive the operation of the parking pawl, the parking pawl may be rotatably mounted on the casing. With the parking motor driving the parking pawl, it is more convenient to realize the rotation operation, and the transmission structure between the motor and the parking pawl is simplified. Of course, when the parking pawl is rotatably mounted, the direction of the rotation axis of the parking pawl may be set in various ways in the space. When the rotation axis of the parking pawl is parallel to the axis of the ratchet wheel and the parking pawl and the ratchet wheel are located on the same plane, the structure is more compact and occupies a smaller space.

On the basis of the plurality of technical solutions of the reducer provided above, it may be further limited that the counting structure comprises teeth on an outer circumferential surface of the ratchet wheel. Accordingly, while cooperating with the parking pawl, the teeth of the ratchet wheel are also simultaneously used to cooperate with the ABS sensor for speed detection. Therefore, the degree of integration is further increased, and the size of the reducer is reduced.

The wheel-side driving mechanism of the invention comprises a wheel-side motor and a reducer drivably connected with the wheel-side motor. The reducer comprises a casing and a transmission shaft rotatably installed on the casing. The transmission shaft at least comprises an input shaft drivably connected with the wheel-side motor and an output shaft drivably connected with a wheel hub. Any transmission shaft is provided with a ratchet wheel which rotates synchronously with the transmission shaft. The ratchet wheel has a counting structure. The counting structure is a continuous concave and convex structure. The casing is provided with an ABS sensor provided corresponding to the counting structure on the ratchet wheel to detect a rotation speed of wheels. A parking pawl is further movably disposed on the casing, and the parking pawl is capable of locking and unlocking the ratchet wheel during operation. In this way, the ratchet wheel which is used cooperatively with the ABS sensor to achieve the detection of the rotation speed of wheels by means of the ABS system is simultaneously used to cooperate with the parking pawl to achieve parking, and the integration of ABS speed measurement and P-position parking is achieved, thus enriching the functions of the reducer, and significantly reducing the size of the wheel-side driving mechanism. In addition, the ratchet wheel does not participate in transmission, is thus not affected by the transmission speed ratio, and can be used by matching with electric vehicles of various types.

Specifically, during disposing of the ratchet wheel, the ratchet wheel may be a disc-shaped ratchet wheel that is rotation-stoppably installed on the transmission shaft. The disc-shaped ratchet wheel may be provided with a greater diameter. In this way, not only the tooth number is increased, which improves the tooth reading accuracy of the ABS sensor, but each tooth can also be provided with a higher structural strength, which ensures parking safety.

On the basis of any one of the two technical solutions of the reducer above, it may be further limited that the ratchet wheel is disposed on the output shaft, so that not only the integration with other structural components becomes more convenient, but the ratchet wheel may also directly act on the wheel hub through the output shaft, while other structural parts do not receive the locking force.

On the basis of any one of the three technical solutions of the reducer above, it may be further limited that the ratchet wheel is located inside the casing. The casing has a protective effect on the ratchet wheel to prevent other parts or external objects from interfering with and affecting the ratchet wheel.

On the basis of any one of the four technical solutions of the reducer above, further optimization may be carried out to provide the casing with a parking motor. The parking motor is capable of driving operation of the parking pawl through a transmission mechanism to achieve the locking and unlocking of the ratchet wheel. With the parking motor driving the parking pawl, by setting the transmission ratio of the transmission structure, the parking pawl is provided with a force sufficient to be engaged with and disengaged from the tooth slot of the ratchet wheel.

When the parking motor is adopted to drive the operation of the parking pawl, the parking pawl may be rotatably mounted on the casing. With the parking motor driving the parking pawl, it is more convenient to realize the rotation operation, and the transmission structure between the motor and the parking pawl is simplified. Of course, when the parking pawl is rotatably mounted, the direction of the rotation axis of the parking pawl may be set in various ways in the space. When the rotation axis of the parking pawl is parallel to the axis of the ratchet wheel and the parking pawl and the ratchet wheel are located on the same plane, the structure is more compact and occupies a smaller space.

On the basis of the plurality of technical solutions of the reducer provided above, it may be further limited that the counting structure comprises teeth on an outer circumferential surface of the ratchet wheel. Accordingly, while cooperating with the parking pawl, the teeth of the ratchet wheel are also simultaneously used to cooperate with the ABS sensor for speed detection. Therefore, the degree of integration is further increased, and the size of the reducer is reduced.

The electric vehicle of the invention comprises a frame. The frame is provided with a wheel hub and a wheel-side driving mechanism driving the wheel hub to rotate. The wheel-side driving mechanism comprises a wheel-side motor and a reducer drivably connected to the wheel-side motor. The reducer comprises a casing and a transmission shaft rotatably installed on the casing. The transmission shaft at least comprises an input shaft drivably connected with the wheel-side motor and an output shaft drivably connected with the wheel hub. Any transmission shaft is provided with a ratchet wheel which rotates synchronously with the transmission shaft. The ratchet wheel has a counting structure. The counting structure is a continuous concave and convex structure. The casing is provided with an ABS sensor provided corresponding to the counting structure on the ratchet wheel to detect a rotation speed of wheels. A parking pawl is further movably disposed on the casing, and the parking pawl is capable of locking and unlocking the ratchet wheel during operation. In this way, the ratchet wheel which is used cooperatively with the ABS sensor to achieve the detection of the rotation speed of wheels by means of the ABS system is simultaneously used to cooperate with the parking pawl to achieve parking, and the integration of ABS speed measurement and P-position parking is achieved, thus enriching the functions of the reducer, significantly reducing the size of the wheel-side driving mechanism, and optimizing vehicle performances. In addition, the ratchet wheel does not participate in transmission, is thus not affected by the transmission speed ratio, and can be used by matching with electric vehicles of various types.

Specifically, during disposing of the ratchet wheel, the ratchet wheel may be a disc-shaped ratchet wheel that is rotation-stoppably installed on the transmission shaft. The disc-shaped ratchet wheel may be provided with a greater diameter. In this way, not only the tooth number is increased, which improves the tooth reading accuracy of the ABS sensor, but each tooth can also be provided with a higher structural strength, which ensures parking safety.

On the basis of any one of the two technical solutions of the reducer above, it may be further limited that the ratchet wheel is disposed on the output shaft, so that not only the integration with other structural components becomes more convenient, but the ratchet wheel may also directly act on the wheel hub through the output shaft, while other structural parts do not receive the locking force.

On the basis of any one of the three technical solutions of the reducer above, it may be further limited that the ratchet wheel is located inside the casing. The casing has a protective effect on the ratchet wheel to prevent other parts or external objects from interfering with and affecting the ratchet wheel.

On the basis of any one of the four technical solutions of the reducer above, further optimization may be carried out to provide the casing with a parking motor. The parking motor is capable of driving operation of the parking pawl through a transmission mechanism to achieve the locking and unlocking of the ratchet wheel. With the parking motor driving the parking pawl, by setting the transmission ratio of the transmission structure, the parking pawl is provided with a force sufficient to be engaged with and disengaged from the tooth slot of the ratchet wheel.

When the parking motor is adopted to drive the operation of the parking pawl, the parking pawl may be rotatably mounted on the casing. With the parking motor driving the parking pawl, it is more convenient to realize the rotation operation, and the transmission structure between the motor and the parking pawl is simplified. Of course, when the parking pawl is rotatably mounted, the direction of the rotation axis of the parking pawl may be set in various ways in the space. When the rotation axis of the parking pawl is parallel to the axis of the ratchet wheel and the parking pawl and the ratchet wheel are located on the same plane, the structure is more compact and occupies a smaller space.

On the basis of the plurality of technical solutions of the reducer provided above, it may be further limited that the counting structure comprises teeth on an outer circumferential surface of the ratchet wheel. Accordingly, while cooperating with the parking pawl, the teeth of the ratchet wheel are also simultaneously used to cooperate with the ABS sensor for speed detection. Therefore, the degree of integration is further increased, and the size of the reducer is reduced.

### BRIEF DESCRIPTION OF THE DRAWINGS

FIG. 1 is a perspective view illustrating an embodiment of a reducer of the invention;
FIG. 2 is a view illustrating the principle for integrating an ABS sensor and a parking pawl in a ratchet wheel;
FIG. 3 is a schematic view illustrating integrating an ABS sensor and a parking pawl in a ratchet wheel according to another embodiment.

In the drawings, "1" represents an ABS sensor, "2" represents a parking pawl, "3" represents a ratchet wheel, "4" represents a parking motor, "5" represents a reducer casing, "6" represents an output shaft, and "7" represents a counting hole.

### DESCRIPTION OF THE EMBODIMENTS

The embodiments of the invention will be further described in the following with reference to the accompanying drawings.

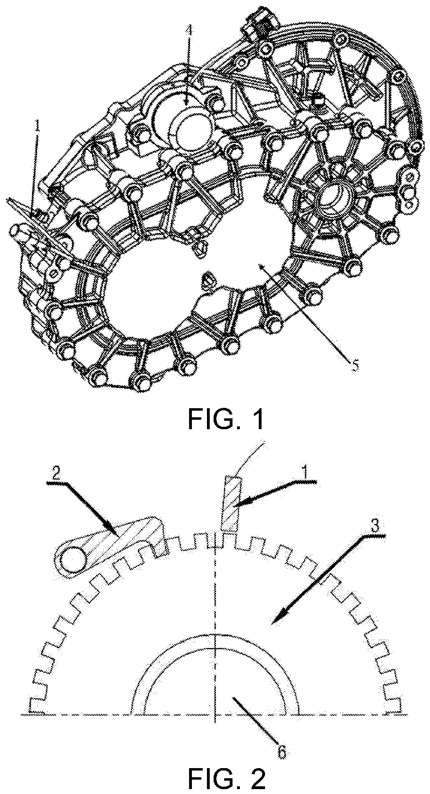

An electric vehicle of the invention includes a vehicle frame and a wheel hub installed on the vehicle frame. The vehicle frame is provided with a wheel-side driving mechanism, and the wheel-side driving mechanism drives the wheel hub to rotate, so as to drive the vehicle to travel. The wheel-side driving mechanism includes a wheel-side motor (not shown) and a reducer drivably connected to the wheel-side motor. As shown in FIGs. 1 and 2, the structure of the reducer includes a reducer casing 5. A transmission shaft is rotatably installed on the reducer casing 5. The transmission shaft includes an input shaft drivably connected with the output shaft of the wheel-side motor and an output shaft 6 drivably connected with the wheel hub. The input shaft and the output shaft achieve speed reduction through a reduction gear set. The reduction gear set may be a pair of directly engaged gears disposed on the input shaft and the output shaft, and, of course, may also include one or more intermediate transmission shafts rotatably mounted on the casing. The intermediate transmission shafts are provided with transition gears that are respectively disposed in parallel. The transition gears are respectively engaged with and driven by gears on the input shaft and the output shaft.

The output shaft 6 of the reducer is provided with a ratchet wheel 3 synchronously rotating with the output shaft 6. The ratchet wheel 3 is located inside the reducer casing 5 and protected by the reducer casing. The reducer casing 5 is provided with an ABS sensor 1 provided corresponding to outer circumferential teeth of the ratchet wheel 3. When the ratchet wheel 3 rotates with the output shaft 6, the ABS sensor reads the teeth on the outer circumference of the ratchet wheel to detect the rotation speed of the wheel hub, i.e., the rotation speed of wheels, and transmits the rotation speed to an ABS controller to achieve the ABS function.

The reducer casing 5 is provided with a parking motor 4. A parking pawl 2 is rotatably mounted inside the reducer casing 5. The rotation axis of the parking pawl 2 is parallel to the rotation axis of the ratchet wheel 3, and the parking pawl and the ratchet wheel are located on the same plane. The parking motor directly or indirectly drives the parking pawl to rotate, so as to achieve locking and unlocking of the parking pawl and the ratchet wheel. In this way, when the parking motor 4 drives the parking pawl to rotate through the transmission structure, the pawl part of the parking pawl can be engaged with the tooth slot of the ratchet wheel to lock the ratchet wheel, thereby locking the wheel hub and achieving parking. To ensure the parking response speed and make the structural design more convenient, an electric motor is preferably adopted for the parking motor. The electric motor is connected with a terminal, and may be connected with a controller through the terminal.

To optimize the speed detection function of the ABS sensor, a multi-tooth ratchet wheel with a tooth-reading function is chosen to be the ratchet wheel, and a sensor that is resistant to a high temperature and is not affected by oil impurities is chosen to be the ABS sensor. In this way, the speed measurement can be as accurate as 1/80 of a revolution or higher. In addition, to ensure the safety and reliability of P-position parking, at the time of design, it is required to check that the vehicle is guaranteed to park safely when the uphill or downhill slope is less than 32% and the vehicle speed is slower than 2 km/h, and if the vehicle speed exceeds 5 km/h, the parking pawl is refrained from locking the ratchet wheel. On the road at a slope of 1/3, when the P-position is to be removed, whether the parking pawl and the ratchet wheel can be smoothly disengaged needs to be verified. Regarding the design of the ratchet wheel, key parameters of the gear, such as the tooth number, tooth pitch, tooth slot width, conversion ratio, tooth length, tooth height, tooth tip run-out errors, etc., need to be modified according to the tooth profile requirement in the ABS sensor technical agreement, so as to ensure that the monitoring of the ABS sensor is reliable and effective during operation.

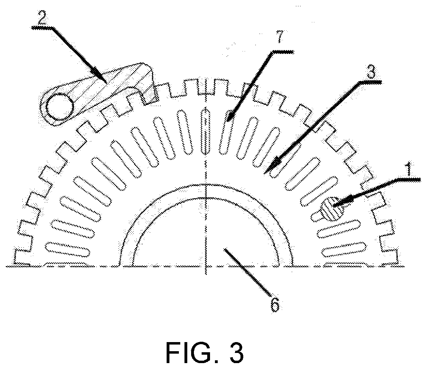

In the embodiment provided above, the teeth of the ratchet wheel can not only be locked with the parking pawl to achieve safe parking, but also serve as a counting structure to cooperate with the ABS sensor to achieve wheel speed detection, thereby achieving an integrative design of the ABS function and safe parking and reducing the size of the wheel-side driving mechanism. Of course, in other embodiments, the teeth of the ratchet wheel may only serve to be locked with the parking pawl to achieve parking, and a continuous concave and convex structure in uniform distribution, such as counting teeth, counting holes, or counting grooves, etc., provided as the counting structure, may be disposed on the end surface of the ratchet wheel to be used cooperatively with the ABS sensor, thereby achieving the wheel speed detection by the ABS sensor. Correspondingly, at this time, the detector head of the ABS sensor needs to face the end surface of the ratchet wheel, such as the structure of FIG. 3 which illustrates the case where counting holes 7 are disposed on the end surface of the ratchet wheel to serve as the counting structure. Alternatively, when a greater difference exists between the tooth reading requirement and the parking safety requirement, two cycles of teeth may be disposed in parallel in the axial direction on the outer circumference of the ratchet wheel. The two cycles of teeth may have the same or different numbers of teeth, and the diameters of the circles on which the two cycles of teeth are arranged may also be the same or different. The two cycles of teeth respectively correspond to the parking pawl and the ABS sensor, and are respectively used to achieve parking and speed detection.

The invention further provides several embodiments of electric vehicles in the following. These embodiments differ from the above embodiment in that the location at which the ratchet wheel is disposed is different. Of course, as the location of the ratchet wheel changes, the location of the ABS sensor also changes correspondingly. For example, the ratchet wheel may be disposed on the input shaft inside the casing, or, in the case with presence of the intermediate transmission shaft, the ratchet wheel may be disposed on the intermediate transmission shaft inside the casing. On the transmission path from the input shaft to the output shaft, the rotation speed of each transmission shaft gradually decreases, and the torque gradually increases, so when the ratchet wheel is disposed on a transmission shaft having a lower rotation speed, it is easier to accurately engage the parking pawl with the ratchet wheel and thereby ensure parking safety. In addition, a transmission gear on the transmission shaft closer to the end of the transmission path has a greater gear diameter as well as a greater pitch with respect to the adjacent transmission shaft, so the ratchet wheel disposed thereon may have a greater wheel diameter as well as a greater number of teeth, and each tooth can exhibit a higher structural strength while the speed detection accuracy of the ABS sensor is improved. Besides, as the location at which the ratchet wheel is disposed is closer to the end of the transmission path, the force transmission path of the locking force of the ratchet wheel is shorter, the number of components receiving the force is fewer, and the strength requirement on the components is also lowered. For example, in the above embodiment, the ratchet wheel is disposed on the output shaft, and the locking force of the parking pawl is directly transmitted to the wheel hub through the output shaft, while the input shaft, the intermediate transmission shaft, and the gears on these components do not receive the force anymore.

Regardless of the location where the ratchet wheel is disposed, a disc-shaped ratchet wheel or a gear formed by forming teeth through directly processing the transmission shaft, i.e., making one of the transmission shafts a gear shaft, may be chosen to be the ratchet wheel. Then, preferably, a disc-shaped ratchet wheel is chosen to be the ratchet wheel, so that the ratchet wheel has a greater wheel diameter, the ratchet wheel may have a greater number of teeth, and the ABS speed measurement accuracy is improved.

When the parking pawl is rotatably mounted to be disposed inside the reducer casing, the rotation axis of the parking pawl may also be perpendicular to the rotation axis of the ratchet wheel. The parking pawl may even be guided and mounted inside the reducer casing to achieve the locking and unlocking of the ratchet wheel through linear operation. At this time, the operation of the parking pawl may be driven by a motor, and may also be driven by a linear motor, an electromagnet, and a telescopic cylinder, etc.

In the electric vehicle of the invention, by integrating the ABS speed measurement function and the P-position parking in the reducer, the degree of integration of the reducer is increased, the size of the wheel-side driving mechanism is reduced, and the various performances of the vehicle are significantly facilitated and improved.

The invention also provides embodiments of the wheel-side driving mechanism and the reducer, respectively. Since the detailed structures of the wheel-side driving mechanism and the reducer have been described in the above embodiments of the electric vehicle, details in these aspects will not be repeated in the following.

## Claims

1. A reducer, comprising a casing and a transmission shaft rotatably installed on the casing, wherein the transmission shaft at least comprises an input shaft drivably connected with a wheel-side motor and an output shaft drivably connected with a wheel hub, and the reducer is **characterized in that** any transmission shaft is provided with a ratchet wheel which rotates synchronously with the transmission shaft, the ratchet wheel has a counting structure, the counting structure is a continuous concave and convex structure, the casing is provided with an ABS sensor provided corresponding to the counting structure on the ratchet wheel to detect a rotation speed of wheels, a parking pawl is further movably disposed on the casing, and the parking pawl is capable of locking and unlocking the ratchet wheel during operation.

2. The reducer as claimed in claim 1, **characterized in that** the ratchet wheel is a disc-shaped ratchet wheel that is rotation-stoppably installed on the corresponding transmission shaft.

3. The reducer as claimed in claim 1 or 2, **characterized in that** the ratchet wheel is disposed on the output shaft.

4. The reducer as claimed in claim 1 or 2, **characterized in that** the ratchet wheel is located inside the casing.

5. The reducer as claimed in claim 1 or 2, **characterized in that** the casing is provided with a parking motor, and the parking motor is capable of driving operation of the parking pawl through a transmission mechanism to achieve the locking and unlocking of the ratchet wheel.

6. The reducer as claimed in claim 5, **characterized in that** the parking motor is an electric motor.

7. The reducer as claimed in claim 5, **characterized in that** the parking pawl is rotatably mounted on the casing.

8. The reducer as claimed in claim 7, **characterized in that** a rotation axis of the parking pawl is parallel to an axis of the ratchet wheel, and the parking pawl and the ratchet wheel are located on a same plane.

9. The reducer as claimed in claim 1 or 2, **characterized in that** the counting structure comprises teeth on an outer circumferential surface of the ratchet wheel.

10. A wheel-side driving mechanism, comprising a wheel-side motor and a reducer connected with the wheel-side motor, wherein the reducer comprises a casing and a transmission shaft rotatably installed on the casing, the transmission shaft at least comprises an input shaft drivably connected with the wheel-side motor and an output shaft drivably connected with a wheel hub, and the wheel-side driving mechanism is **characterized in that** any transmission shaft is provided with a ratchet wheel which rotates synchronously with the transmission shaft, the ratchet wheel has a counting structure, the counting structure is a continuous concave and convex structure, the casing is provided with an ABS sensor provided corresponding to the counting structure on the ratchet wheel to detect a rotation speed of wheels, a parking pawl is further movably disposed on the casing, and the parking pawl is capable of locking and unlocking the ratchet wheel during operation.

11. The wheel-side driving mechanism as claimed in claim 10, **characterized in that** the ratchet wheel is a disc-shaped ratchet wheel that is rotation-stoppably installed on the corresponding transmission shaft.

12. The wheel-side driving mechanism as claimed in claim 10 or 11, **characterized in that** the ratchet wheel is disposed on the output shaft.

13. The wheel-side driving mechanism as claimed in claim 10 or 11, **characterized in that** the ratchet wheel is located inside the casing.

14. The wheel-side driving mechanism as claimed in claim 10 or 11, **characterized in that** the casing is provided with a parking motor, and the parking motor is capable of driving operation of the parking pawl through a transmission mechanism to achieve the locking and unlocking of the ratchet wheel.

15. The wheel-side driving mechanism as claimed in claim 14, **characterized in that** the parking motor is an electric motor.

16. The wheel-side driving mechanism as claimed in claim 14, **characterized in that** the parking pawl is rotatably mounted on the casing.

17. The wheel-side driving mechanism as claimed in claim 16, **characterized in that** a rotation axis of the parking pawl is parallel to an axis of the ratchet wheel.

18. The wheel-side driving mechanism as claimed in claim 10 or 11, **characterized in that** the counting structure comprises teeth on an outer circumferential surface of the ratchet wheel.

19. An electric vehicle, comprising a frame, wherein the frame is provided with a wheel hub and a wheel-side driving mechanism driving the wheel hub to rotate, the wheel-side driving mechanism comprises a wheel-side motor and a reducer drivably connected to the wheel-side motor, the reducer comprises a casing and a transmission shaft rotatably installed on the casing, the transmission shaft at least comprises an input shaft drivably connected with the wheel-side motor and an output shaft drivably connected with the wheel hub, and the electric vehicle is **characterized in that** any transmission shaft is provided with a ratchet wheel which rotates synchronously with the transmission shaft, the ratchet wheel has a counting structure, the counting structure is a continuous concave and convex structure, the casing is provided with an ABS sensor provided corresponding to the counting structure on the ratchet wheel to detect a rotation speed of wheels, a parking pawl is further movably disposed on the casing, and the parking pawl is capable of locking and unlocking the ratchet wheel during operation.

20. The electric vehicle as claimed in claim 19, **characterized in that** the ratchet wheel is a disc-shaped ratchet wheel that is rotation-stoppably installed on the corresponding transmission shaft.

21. The electric vehicle as claimed in claim 19 or 20, **characterized in that** the ratchet wheel is disposed on the output shaft.

22. The electric vehicle as claimed in claim 19 or 20, **characterized in that** the ratchet wheel is located inside the casing.

23. The electric vehicle as claimed in claim 19 or 20, **characterized in that** the casing is provided with a parking motor, and the parking motor is capable of driving operation of the parking pawl through a transmission mechanism to achieve the locking and unlocking of the ratchet wheel.

24. The electric vehicle as claimed in claim 23, **characterized in that** the parking motor is an electric motor.

25. The electric vehicle as claimed in claim 23, **characterized in that** the parking pawl is rotatably mounted on the casing.

26. The electric vehicle as claimed in claim 25, **characterized in that** a rotation axis of the parking pawl is parallel to an axis of the ratchet wheel.

27. The electric vehicle as claimed in claim 19 or 20, **characterized in that** the counting structure comprises teeth on an outer circumferential surface of the ratchet wheel.
